# EUROPEAN PATENT APPLICATION

(11) **EP 3 546 034 A1**
(43) Date of publication of application: **02.10.2019**
(21) Application number: 19382213.7
(22) Date of filing: 27.03.2019
(51) Int. Cl.: A63F 9/24, A63G 31/00, A63G 33/00, A63B 9/00, A63B 24/00, A63F 13/21, A63F 13/24, A63F 13/25

(54) **ELECTRONIC DEVICE FOR CHILDREN'S GAME STRUCTURES**

(30) Priority: 27.03.2018 ES 201830296
(71) Applicant: Sumalim, S.L., 31398 Tiebas-Navarra (ES)
(72) Inventor: GUERRA CASTILLO, José Miguel, 31398 TIEBAS-NAVARRA (ES); GUERRA VILLANUEVA, Mikel, 31398 TIEBAS-NAVARRA (ES); MINDEGUIA PETRIRENA, Ion, 31398 TIEBAS-NAVARRA (ES)
(74) Representative: Urizar Anasagasti, Jesus Maria

(57) **Abstract**

Electronic device for children's game structures comprising a totem (2) and various nodes (3) distributed among the game structures (1) all of which are connected together, said totem (2) including a processor which manages the commands of the games, sends the orders to the nodes (3) so that they act according to said orders and collects the pulsations effected in the nodes by the players and depending on the game returns one order or another to all or parts of said nodes (3). Each one of the nodes (3) comprises circuits incorporating: a controller (35) which manages the corresponding node (3), which incorporates various LEDs and the circuits associated with the functioning of the same, capacitive and/or proximity sensors which capture different types of action on the node, said LEDs being situated in windows (321) which have lateral walls open towards the upper part, which collects the light generated by them and focuses it towards an upper cover (31) which has translucent cells (311) which act as luminous diffusors when the LEDs are switched on.

## Description

### Object of the invention

The object of the invention is an electronic device comprising a totem and various nodes distributed among game structures, all of which are connected together. In which said totem has a processor which manages the commands of the games, sends the orders to the nodes so that they act according to said orders and collects the pulsations effected in the nodes by the players and depending on the game returns one order or another, to all or part of said nodes. While each one of the nodes includes different visual, touch and acoustic means for transmitting game commands and operation by the user during the game development.

### Background of the invention

At present, there are various prior arts of electronic children's playgrounds which have this arrangement of nodes with pulsators or indicators which interact with the child for the purpose of them following game guidelines, controlled from a processor normally situated in a totem located in the environment of the children's playground.

Document EP1732048 describes a play area comprising a flexible floor lining and at least one presence sensor arranged close to the floor cover. The equipment for the operation of the play area comprises an information processing unit, a communications network between the actuators and sensors and/or electric supply means which are generally located close to the floor cover.

Document WO2008148002A1 describes an outdoor game system comprising a plurality of vertical towers operatively connected and suitable for installation outdoors, each tower including a plurality of contact assemblies, each of which incorporates an interface capable of responding or detecting contact of the user by way of a light and sound source, close to the interface, where the contacts operate in random or predetermined sequence determining the functions of the game.

Document US2016136529A1 describes a system for a games area which comprises an apparatus situated on a support structure or totem which also includes a support platform of the user which is displaceable in relation to said totem under the influence of kinetic energy transmitted by said user. It also includes a sensor connected to a processor, adapted to detect a movement of the support element; said processor being that which controls, in a visual display, the elements selectable from a list and which causes the list to displace in response to the signals detected from the cited motion sensor. In an alternative embodiment, it also has user interface elements, connected to the process unit, each one of which comprises a case in the form of a node, capable of being mounted on one of the elements making up a playground and a front cover including a light source and a game device capable of being actuated by the user.

Ultimately, there are multiple examples of interactive games for outdoor play areas, but none of these systems combine different activity programs which allow the user to exercise skill, balance, coordination, speed, memory or comprehension. There is therefore the need to create play areas for children and/or adults in which, in addition to psychomotricity, the cognitive or socio-emotional areas such as memory, attention, language, perception, communication, ability to solve problems, reasoning and creativity are exercised. There is also the need to improve the design of children's games, especially in the sense of protecting individuals working in said installations and improving the game possibilities, to create new recreational effects and intellectual development in these areas or game fields.

### Description of the invention

With the aim of achieving the proposed objectives and avoiding the drawbacks mentioned in the previous section, the invention proposes a device with the characteristics of claim 1.

The electronic device for children's game structures is based on a network of interactive nodes which communicate with each other by means of a processor which also has a user interface (a touch screen or series of pulsators) by way of which the user selects the game to be carried out. To this end, different activity programs are installed in the processor which the user can execute depending on what they wish to exercise. These activities are constructed with programming code which, when activated, executes a series of processes in the nodes to which the user should respond since the node is prepared to interact with them, by means of proximity sensors or capacitive sensors. In order to achieve these objectives, it is necessary for the nodes to have the ability to control the activation of LEDs and capacitive and proximity sensors and to manage an internal speaker; all of which to transmit to and receive game commands from the user easily so that it can be executed even by children, without risks during operation.

This processor is arranged in a structure independent of the structure where the nodes are arranged, in a totem or physical element which also includes a touch screen which acts as a user interface when selecting and executing games; in addition to a power source of all the nudes of the game device.

Each one of the nodes is a device composed of three pieces of plastic material, two polyamide and another polycarbonate. These pieces form the case of the device in which electronic plates are housed which carry out the functions of activation controller of LEDs and a speaker and controlling capacitive and proximity sensors.

The node device is prepared to emit light by means of LED, representing different signals which communicate to the user the need to respond to them with a determined action. The device also emits different call sounds which communicate to the user certain information. The response from the user to the device is effected by means of the actuation of one of the capacitive or proximity sensors by way of different types of action on the node: Contained pulsation, touch, rotating the finger around the central circumference, capacitive touch which interacts with the LEDs or a combination of some/all of these.

By means of programming, the types of interaction of the user and each one of the multiple LEDs making up the electronic plate are changed, it responds independently according to how they are placed and distributed in the electronic circuit. In the processor, situated in the totem controlling the device, different programs of the activities are installed which the user in turn can control by means of a touch screen or similar graphic interface. In the same processor is installed the software allowing the user to interact with the system, this software includes different activity selection menus, participant numbers, statistics, help menus, etc. Once the activity is selected and the game initiated, it starts to be used exclusively in the mesh of interactive nodes.

### Description of the figures

In order to complement the description being made and with the object of helping to better understand the characteristics of the invention, said description is accompanied by a set of drawings where, in an illustrative and non-limiting manner, the following has been represented:

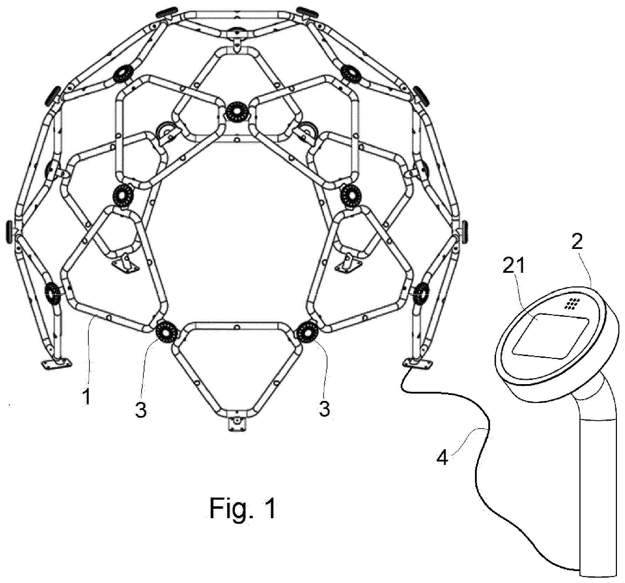

- Figure 1 shows a general view of a structure (1) of a playground in which a plurality of nodes (3) are incorporated, all of which are connected to a totem (2).

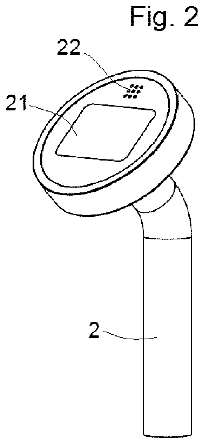

- Figure 2 shows a totem (2).

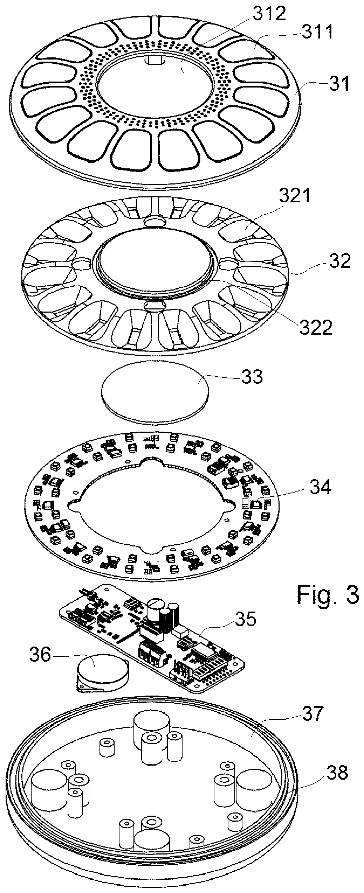

- Figure 3 represents a view, with its exploded elements, of a node (3).

### Preferred embodiment of the invention

As can be observed in the mentioned figures, this electronic park applicable to various children's game structures (1) is made up of a totem (2) and various nodes (3) distributed throughout said structures and connected together, by means of conductors (4) or by a wireless means, together generating a new style of game, in which not only are psychometric skills developed, but also cognitive and socio-emotional skills.

The represented game structure (1) presents a form of geodesic dome formed by triangles implemented in tubular profiles, joined by the vertices by means of another tubular profile in a T shape, in which are arranged the nodes (3). This tubular structure allows the cables (4) connecting the different nodes together to pass through, thus forming a mesh of nodes (3) which is understood as a network, controlled by the totem (2). This allows games to be created and provided which are developed by the combination of one, various or all the nodes simultaneously, making it possible for the number of users capable of playing the game simultaneously to be increased.

Each one of the nodes (3) is made up of a base or lower cover (37), on which an upper cover (31) is hermetically closed with an O-ring, said upper cover protects the entire assembly of circuits and the rest of the elements of this apparatus, among which is at least one electronic plate (PCB) which incorporates electronic circuits with the following functions:
- a first plate or circuit incorporates a controller (35) which manages the corresponding node (3), receiving and sending the signals to the rest of the circuits; it also causes the LEDs to illuminate, the sensors to capture one type of pulsation or another to activate the sound, etc., all of which depending on the game which is selected, it will behave one way or another.
- a second plate or electronic circuit (34) is intended to control various LEDs, which are oriented towards the upper part such that they stick out through some of the windows (321) of an intermediate cover (32) which collects all the light generated by said LEDs and focuses it towards the upper cover (31) which has, corresponding to the windows (321), translucent cells (311) which act as diffusors which are illuminated when the corresponding LED situated below them is switched on.
- a third electronic plate or circuit (33) incorporates capacitive and/or proximity sensors which capture different types of action on the node: contained pulsation, touch, rotating the finger around the central circumference or some combination of some/all of these. In a preferred embodiment, this sensor plate (33) is situated in a central hole (322) of the intermediate plate (32), being accessible from a central window (312) existing in the upper cover (31).

A speaker (36) is also preferably placed in the interior of each node which emits sound which together with the combination of switched-on and/or switched-off LED lights constitute the game commands for each case.

The intermediate plate (32) has a central hole (322) in which is located the sensor plate (33) which is accessible from a central window (312) defined in the upper cover (31) by way of which it is accessible to the users for its operation during the game development.

The totem (2) is the brain of the game in which all the commands of the game are managed and the orders are sent to the nodes by cable and which act in accordance with the orders of the totem. It also collects the pulsations in the nodes from the children and depending the game carries out one order or another. The games are selected on a touch screen (21) by means of a graphic interface and, optionally, transmits commands by way of a speaker (22).

The totem (2) in turn includes an electrical outlet to the domestic network and a transformer whose output voltage is around 12 V.

The current of the general network of 220 V enters the totem (2) which includes a voltage transformer, with an output of 12 V intended to power the different nodes (3) of the installation, connected by means of conductor cables. By means of a GSM card, the totem is periodically connected to the online platform to upload all the data (statistics, errors...) which also allows it to be controlled remotely in order to be updated, restarted or load another pack of new games.

All the electronic parks installed are connected by GSM to a central server by means of an online platform, for the purposes of this connection allowing the status, location and possibility of remote control to be checked, in addition to collecting all types of usage and game information. This platform, preferably situated in the cloud, collects all the data from the totems of the parks, analyses them, generates all classes of statistics/data and manages the remote control between the client and the park. All this is visualised using a graphic interface with access for clients who have these types of electronic parks installed. By means of this online platform, the client has access to (reduced) statistics and control of hours of operation of the parks installed by the same while the provider has access to statistics, controls, updates, data, etc.

With the nature of the invention and a preferred exemplary embodiment sufficiently described, it should be stated for the appropriate purposes that the materials, shape, size and arrangement of the elements described can be modified, provided it does not involve an alteration of the essential characteristics of the invention claimed below.

## Claims

1. An electronic device for children's game structures comprising a totem (2) and various nodes (3) distributed among the game structures (1) all of which are connected together, said totem (2) including a processor which manages the commands of the games, sends the orders to the nodes (3) so that they act according to said orders and collects the pulsations effected in the nodes by the players and depending on the game returns one order or another to all or parts of said nodes (3), **characterised in that** each one of the nodes (3) comprises:
- a base or lower cover (37) on which an upper cover (31) is hermetically closed with an O-ring (38), protecting the circuits and other elements inside both covers;
- at least one electronic plate (PCD) which incorporates electronic circuits with the following functions:
▪ A first plate or circuit which incorporates a controller (35) which manages the corresponding node (3), receiving and sending the signals to the other circuits; it also causes the LEDs and sensors existing in the node to illuminate and capture one or another type of pulsation, depending on the instructions received from the totem, as a function of the game which is selected;
▪ A second plate or electronic circuit (34) which incorporates various LEDs and the circuits associated with the functioning of the same which are oriented towards the upper part of the node (3);
▪ A third electronic plate or circuit (33) which incorporates capacitive and/or proximity sensors which capture different types of action on the node, whether it be a type of: contained pulsation, touch, rotating the finger around the central circumference or some combination of some/all of these.
- an intermediate cover (32) which, on the perimeter, has a plurality of windows (321) situated corresponding to each one of the LEDs of the plate (34) which have lateral walls open towards the upper part which collects the light generated by said LEDs and focuses it towards an upper cover (31);
- an upper cover (31) which, on the perimeter, has, corresponding to the windows (321) of the intermediate cover (32), translucent cells (311) which act as luminous diffusors when the corresponding LED situated below them is switched on.

2. The device according to claim 1, **characterised in that** the game structure (1) has a dome formed by a plurality of triangles implemented in tubular profiles joined by the vertices in which the nodes (3) are arranged by way of whose profiles the cables (4) pass which connect the different nodes (3) together, forming a mesh of nodes (3) which is understood as a network in which the games are developed by a combination of one, various or all the nodes (3) simultaneously.

3. The device according to any of the preceding claims, **characterised in that** each one of the nodes (3) incorporates a speaker (36) by way of which commands from the game to be developed are transmitted to the users.

4. The device according to any of the preceding claims, **characterised in that** the intermediate plate (32) has a central hole (322) in which the sensor plate (33) is located which is accessible from a central window (312) defined in the upper cover (31) by way of which the users operate the sensors during the game development.

5. The device according to any of the preceding claims, **characterised in that** the totem (2) includes an electrical outlet to the domestic network and a transformer whose output voltage, around 12 V, is intended to power the different nodes (3) of the installation, connected by means of conductor cables.

6. The device according to any of the preceding claims, **characterised in that** the totem (2) includes a touch screen type interface by way of which the games to be carried out by the user are selected.

7. The device according to any of the preceding claims, **characterised in that** the totem (2) includes a GSM telephone connection card or by way of a data network by means of which it communicates statistical data or errors produced to the supporter and is controlled remotely for its updating or loading new games.
